Europäisches Patentamt

European Patent Office

Office européen des brevets

(11) Publication number: **0 100 625**
**B1**

(12)

# EUROPEAN PATENT SPECIFICATION

(45) Date of publication of patent specification: **23.11.88**

(51) Int. Cl.⁴: **G 01 C 17/38,** G 01 C 17/28

(21) Application number: **83304197.3**

(22) Date of filing: **20.07.83**

(54) Measuring system of magnetometer setting direction.

(30) Priority: **31.07.82 JP 134591/82**

(43) Date of publication of application:
**15.02.84 Bulletin 84/07**

(45) Publication of the grant of the patent:
**23.11.88 Bulletin 88/47**

(84) Designated Contracting States:
**DE FR GB**

(56) References cited:
**GB-A-1 416 379**
**GB-A-2 035 570**
**US-A-2 389 146**
**US-A-3 601 899**

(73) Proprietor: **KABUSHIKI KAISHA SAURA KEIKI
SEISAKUSHO**
**39-4 Sugamo 3-chome**
**Toshima-ku Tokyo (JP)**

(72) Inventor: **Watanabe, Yoshiteru**
**47-8, Urajionji**
**Iwatsuki-shi Saitama-ken (JP)**

(74) Representative: **Newstead, Michael John et al
Haseltine Lake & Co. 28 Southampton Buildings
Chancery Lane
London, WC2A 1AT (GB)**

Courier Press, Leamington Spa, England.

## Description

Background of the invention
Field of the invention
The present invention relates to a system for measuring the direction in which a magnetometer is to be set, without use of any compass such as a magnetic compass, gyrocompass, etc.

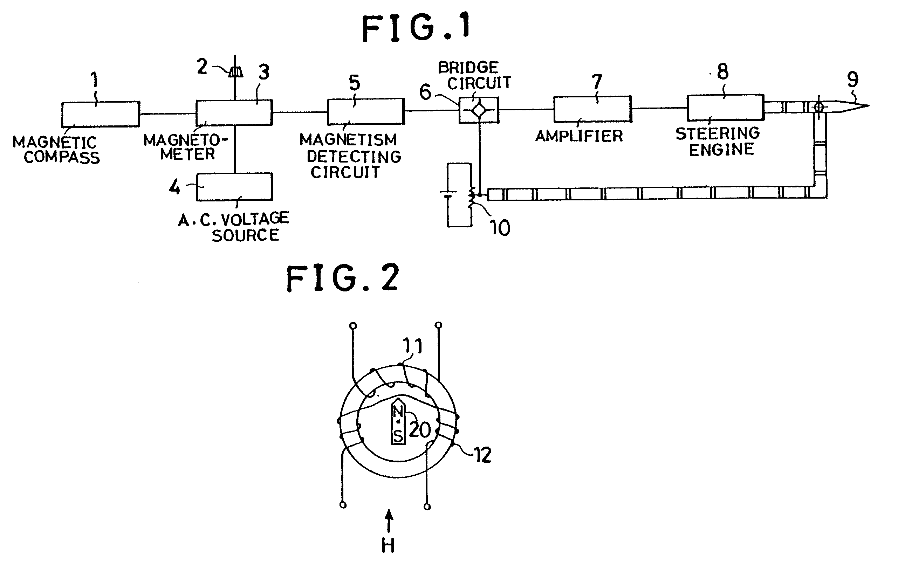

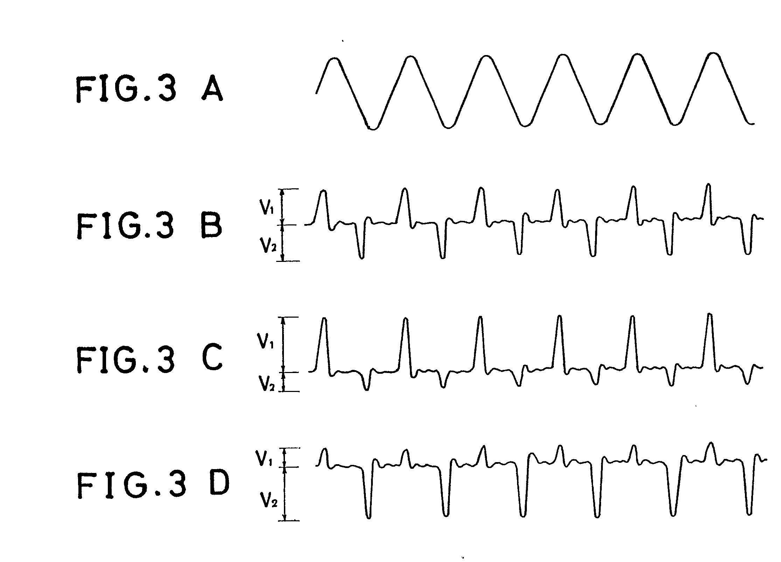

Description of the prior art:
In a conventional automatic steering gear for automatically controlling the steerage of a ship, a controller (a magnetometer) 3 having a course setting knob 2 is superposed on a magnetic compass 1 as illustrated by a structural block diagram in Fig. 1 and operated as will be described afterward. Denoted by 4 is a source of AC voltage. An output corresponding to the operation of the course setting knob 2 is obtained in a magnetism detecting circuit 5 and applied to a pair of terminals of a bridge circuit 6. Fig. 2 is a schematic view of a magnetometer which has excitation AC winding 11 and output winding 12. When a magnetic core 20 and the aforementioned windings are set in position as illustrated, the output winding has a waveform shown by $B$ in Fig. 3. Shown by $A$ in Fig. 3 is an excitation AC waveform. The waveform $B$ in Fig. 3 stands for the second high frequency of the excitation AC waveform and satisfies the relation of $V_1 = V_2$. When the knob 2 of the controller is rotated to shift the windings in position relative to a magnetic needle, the output winding 12 has a waveform having the relation of $V_1 > V_2$ as shown by $C$ in Fig. 3. When the knob 2 is reversely rotated, the waveform has the relation of $V_1 < V_2$ as shown by $D$ in Fig. 3. This voltage, while the magnetism detecting circuit 5 regulates the angle of rotation of the knob and the variation in voltage, is applied to one side of the bridge circuit 6. To another side of the bridge circuit is applied an output from a follow-up potentiometer 10. The difference between the two outputs is taken out of the bridge circuit 6 and amplified in an amplifier 7. The amplified value causes a steering engine 8 to be driven and then a rudder 9 is allowed to move. The movement of the rudder 9 serves to actuate the follow-up potentiometer 10 and cause an input to the amplifier 7 to become zero. For this reason, the rudder 9 is set in a direction in which the knob 2 is rotated. As a result, the direction in which a ship advances relative to the magnetic needle 20 is to be recognized. A magnetic compass, when attached to a hull, gives rise to deviation due to iron structures on the hull and, in adopting automatic steering, sometimes causes a ship to advance meanderingly. A gyrocompass is used more frequently than a magnetic compass because the former has higher performance than the latter. However, a gyrocompass is disadvantageous in that large electric power and high-speed rotation are required and consequently that it is to become large-sized.
An example of a compass having no moving parts, the sensing elements of which consisting of four coils equally spaced around a single toroidal core, is known from US—A—3 601 899.

Summary of the invention
The present invention has been accomplished in order to eliminate the aforementioned disadvantages.
An object of the present invention is to provide a system for accurately measuring the direction in which a magnetometer is to be set, which has a simple construction and which is little affected by iron structures on a hull.
To attain the object described above, according to the present invention, there is provided a system for measuring the magnetometer setting direction relative to the geomagnetic field direction, which comprises preparing a magnetometer provided with a magnetic core having excitation AC winding and output winding wound therearound, applying an alternating current having an amplitude large enough to saturate the magnetic core, forming the output winding of two coils which are equal in winding number of times and are connected in series, and obtaining from the output winding, as variation in pulse width, an output corresponding to an angle to be formed between a line interconnecting the point of connection of the two coils and the central point of the magnetic core and the geomagnetic field direction.
The aforementioned object and other objects and characteristic features of the present invention will become apparent from the description to be given hereinbelow with reference to the accompanying drawings.

Brief description of the drawings:
Fig. 1 is a block diagram illustrating the structure of a conventional automatic steering gear.
Fig. 2 is a schematic view illustrating a conventional magnetometer.
Fig. 3 shows waveform diagrams obtained by a conventional system.
Fig. 4 is a structural block diagram showing one embodiment of the system according to the present invention.
Fig. 5 is a schematic view showing a magnetometer usable in the embodiment of Fig. 4.
Fig. 6 is a concrete structural view showing the magnetism detecting circuit used in the embodiment of Fig. 4.
Fig. 7 shows waveform diagrams obtained by the present system.
Fig. 8 is a schematic view showing another magnetometer usable in the embodiment of Fig. 4.

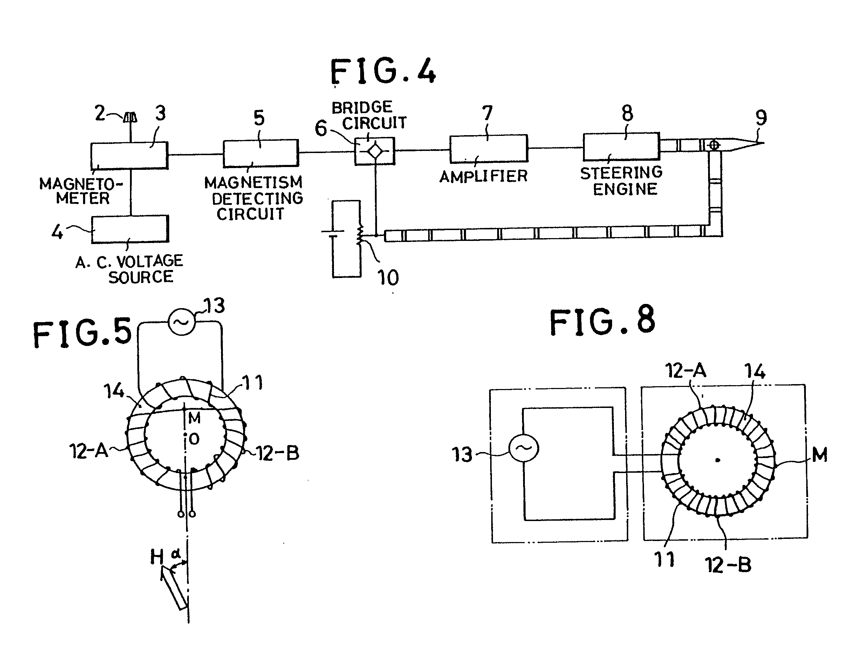

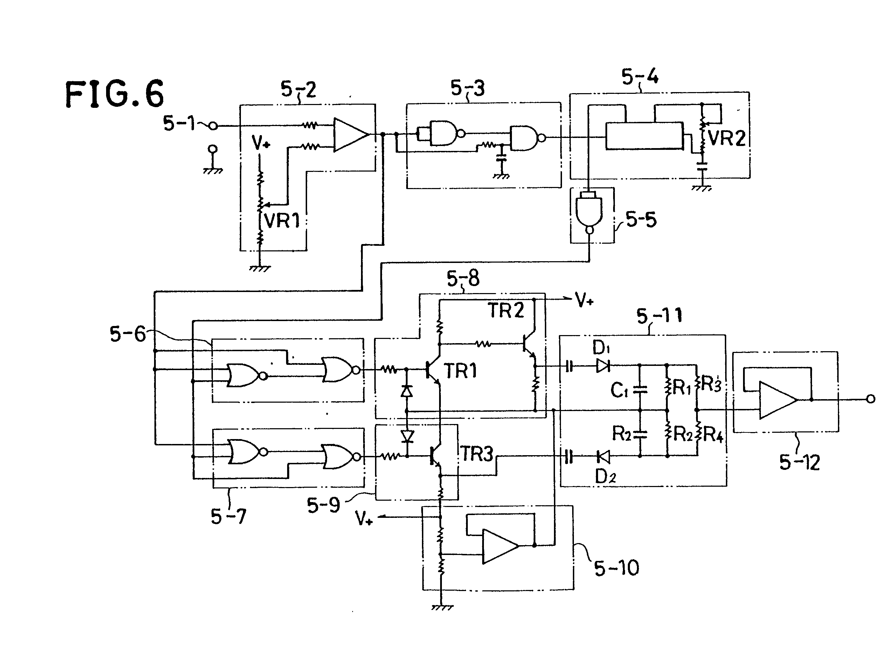

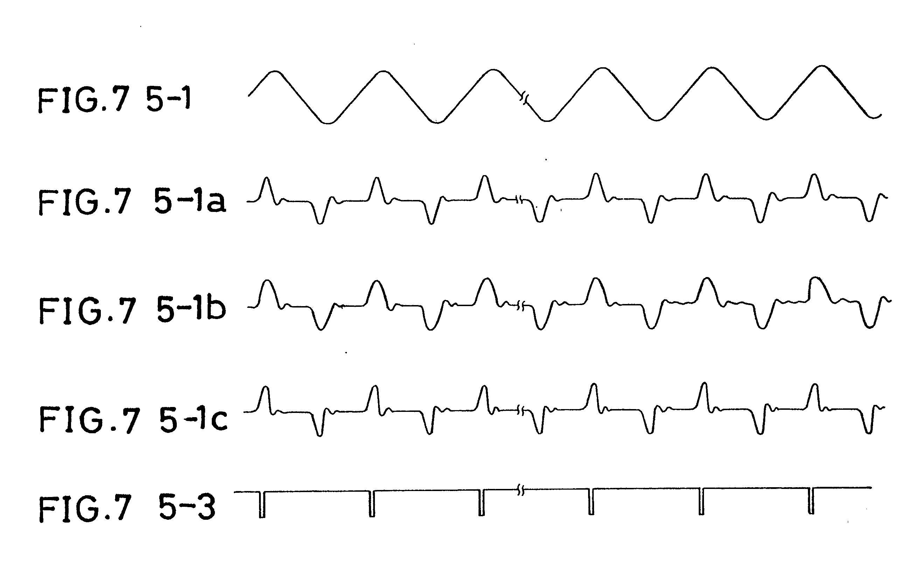

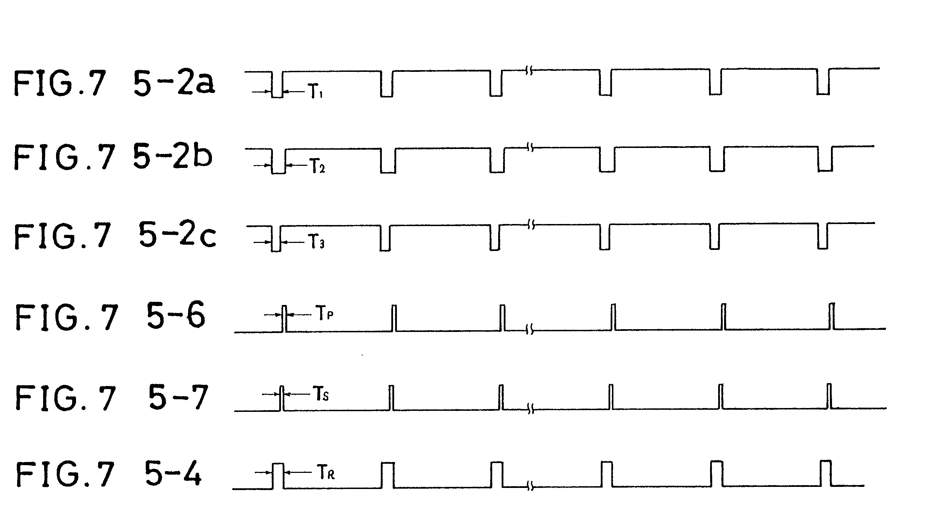

Description of the preferred embodiment:
The present invention will now be described with reference to Figs. 4—7. Fig. 4 is a block diagram showing the structure of one embodiment of the present invention which is applied to the automatic steering gear shown in Fig. 1. This embodiment does not use the magnetic compass 1 as superposed on the controller (the magnetometer) 3 in Fig. 1. The identical or similar components of this embodiment are denoted by like numerical symbols. A magnetometer shown in Fig. 5 has excitation AC winding 11 and output windings 12-A and 12-B equal in winding number of times, which are wound around a circular magnetic core 14. An excitation source 13 has an amplitude large enough to saturate the magnetic core 14 and is identified with an AC voltage source 4 shown in Fig. 4. The output windings 12-A and 12-B are connected in series at a point M. An output corresponding to an angle α formed between a line interconnecting the point M and a center O of the circle defined by the magnetic core and the geomagnetic field direction is obtained from the output windings 12-A and 12-B. The output signal thus obtained is applied to a magnetism detecting circuit 5. Fig. 6 shows a concrete example of the construction of the magnetism detecting circuit 5. Fig. 7 shows signal waveforms in portions of the magnetism detecting circuit 5, which are denoted by like numerical symbols. When the aforementioned angle α is 0°, the waveform at an input terminal 5-1 of the magnetism detecting circuit 5 is shown by 5-1a in Fig. 7 which has the relation of $V_1=V_2$ similarly to the waveform B in Fig. 3. Since a comparison circuit 5-2 detects the plus side alone of the signal in one cycle, the operating point is adjusted by a variable resistor VR1. An output from the comparison circuit 5-2 is shaped into a minus pulse as shown by 5-2a in Fig. 7 and inputted to a direction discerning circuit for left rudder 5-6, a direction discerning circuit for right rudder 5-7 and a trigger circuit 5-3. In the trigger circuit 5-3 in Fig. 6, a trigger signal shown by 5-3 in Fig. 7 is produced by the leading edge of the pulse 5-2a. A monostable multivibrator 5-4 is set, and the pulse width is adjusted by a variable resistor VR2 to become identical with the width of the minus pulse of the comparison circuit 5-2. An output from the monostable multivibrator 5-4 is subsequently inverted by an inverter 5-5 and the resultant output is applied to the direction discerning circuits 5-6 and 5-7. The direction discerning circuits 5-6 and 5-7 are constituted respectively by NOR gates. When the position in rotation of the knob 2 of the controller allows the aformentioned angle α to be 0°, therefore, the pulse time $T_R$ of the monostable multivibrator 5-4 is equal to the output signal $T_1$ of the comparison circuit 5-2 and, at this time, the outputs both from the direction discerning circuit for left rudder 5-6 and from the direction discerning circuit for right rudder 5-7 have no signal.

When the course setting knob 2 is rotated to port the helm, the magnetic core 14 of the magnetometer is rotated to allow the angle α to be some degrees. Therefore, the output signal from the output windings 12-A and 12-B has a pulse waveform which becomes dull and large in width as shown by 5-1b in Fig. 7. At this time, however, there is little variation in amplitude. For this reason, the output from the comparison circuit 5-2 has also a wide pulse shown by 5-2b in Fig. 7 and is inputted to the direction discerning circuits 5-6 and 5-7. The pulse width $T_R$ of the output from the monostable multivibrator 5-4 and the width $T_2$ of the output 5-2b from the comparison circuit 5-2 are compared with each other in the direction discerning circuit for left rudder 5-6 and, only when $T_R<T_2$ is satisfied, the direction discerning circuit for left rudder issues an output. That is to say, when the output signal from the direction discerning circuit for left rudder 5-6 is denoted by $T_P$, there is obtained an equation of $T_P=T_2-T_R$ and a slender pulse $T_P$ is obtained as shown by 5-6 in Fig. 7. The degree of the rotation angle α of the magnetic core 14 of the magnetometer is proportional to the width of the pulse $T_P$.

When the course setting knob 2 is rotated to starboard the helm, there are obtained waveforms 5-1c and 5-2c shown in Fig. 7. the direction discerning circuit for right rudder 5-7 functions similarly to the direction discerning circuit for left rudder 5-6. When the output from the circuit 5-7 is denoted by $T_S$, there is obtained an equation of $T_S=T_R-T_3$ (wherein $T_3$ stands for the pulse width of the output 5-2c of the comparison circuit). At this time, there is obtained a slender pulse $T_S$ as shown by 5-7 in Fig. 7.

The outputs from the direction discerning circuits 5-6 and 5-7 are inputted respectively to inverters 5-8 and 5-9 which function to effect both inversion and level change. In a reference voltage source 5-10, the voltage $V_+$ is approximately halved and applied to emitter circuits of transistors TR1 and TR3 constituting the inverters. The output $T_P$ from the direction discerning circuit for left rudder 5-6 is inverted by the transistor TR1 and then further inverted by a transistor TR2 to bring a diode $D_1$ in a charge and discharge circuit 5-11 to continuity. As a result, a condenser $C_1$ is charged and, upon passage of the pulse, electric discharge occurs at a resistor $R_1$. Therefore, the potential at The point of connection between resistors $R_3$ and $R_4$ is on the plus side and a steering angle signal for porting the helm is obtained from an output conversion and takeout circuit 5-12. In the case of the output pulse $T_S$, it is inverted by the inverter 5-9 and a diode $D_2$ is charged in the minus direction. As a result, the potential at the point of connection between the resistors $R_3$ and $R_4$ is on the minus side and a steering angle signal for starboarding the helm is obtained. Either of the steering angle signals is applied to a bridge circuit 6 shown in Fig. 4 to thereby effect automatic steering similarly to a conventional automatic steering gear. Since the controller (the magnetometer) 3 has heretofore been required to have a magnetic compass attached thereto, as described previously, it has taken much time to determine a place where the controller is to be set in order to prevent the magnetic compass from giving rise to deviation. However, since the magnetometer setting place is not restricted in the present invention, the present invention is more advantageous than the conventional system.

Further, in the conventional system adopting both the magnetic compass and the controller, the relative position between the magnetic needle and the coils of the controller becomes unstable by pitching and rolling of a ship on a voyage, with the result that the knob operation is apt to be inaccurate and therefore that accuracy in measuring and reading out the steering angle cannot be improved. On the other hand, the present invention can accurately measure the steering angle because compass is used and therefore because it is unnecessary to consider the aforementioned relative position on sail.

A magnetometer shown in Fig. 8 is usable for the purpose of the present invention in place of the magnetometer shown in Fig. 5. This magnetometer has single winding having portions serving as excitation AC winding 11 and output winding 12-A and 12-B, and an output to the magnetism detecting circuit 5 is taken out of the point $M$ of connection of the portions corresponding to the output windings. In this embodiment, since a pulse waveform corresponding to an angle formed between a line interconnecting the point $M$ and the central point $O$ of a magnetic core 14 and the geomagnetic field direction can be obtained, the steering angle can be detected by use of the magnetism detecting circuit shown in Fig. 6.

As described above, according to the present invention, since an output corresponding to the angle formed relative to the geomagnetic field direction is obtained in the form of variation in pulse width as an output signal of the magnetometer, the pulse waveform can subsequently be operated and thereby the steering angle can easily be found.

## Claim

A measuring system of a magnetometer setting direction relative to the geomagnetic field direction, which comprises preparing a magnetometer provided with a magnetic core (14) having excitation AC winding (11) and output winding wound therearound, applying an alternating current having an amplitude large enough to saturate said magnetic core (14), forming said output winding of two coils (12A, 12B) which are wound around said magnetic core (14) by equal number of times and connected in series, and obtaining from said output winding, as variation in pulse width, an output corresponding to an angle ($\alpha$) to be formed between a line interconnecting the point (M) of connection of said two coils (12A, 12B) and the central point (O) of said magnetic core (14) and the geomagnetic field direction.

## Patentanspruch

Meßsystem zum Messen der Richtung, in die ein Magnetometer relativ zu der Richtung des erdmagnetischen Feldes einzustellen ist, bestehend aus
—dem Vorbereiten des Magnetometers, das mit einem Magnetkern (14) versehen ist, um den eine Wechselstromerregerwicklung (11) und eine Ausgangswicklung gewickelt sind,
—dem Zuführen eines Wechselstroms, der eine ausreichend große Amplitude zum Sättigen des Magnetkerns (14) hat,
—dem Bilden der Ausgangswicklung aus zwei Spulen (12A, 12B), die mit gleichen Windungszahlen um den Magnetkern (14) gewickelt und in Reihe geschaltet sind, und
—dem Gewinnen eines Ausgangssignals aus der Ausgangswicklung in Form einer Änderung der Impulsbreite, wobei das Ausgangssignal einem Winkel ($\alpha$) entspricht, der zwischen einer Linie, die den Verbindungspunkt (M) der zwei Spulen (12A, 12B) und den Mittelpunkt (O) des Magnetkerns (14) miteinander verbindet, und der Richtung des erdmagnetischen Feldes zu bilden ist.

## Revendication

Un système de mesure de l'orientation d'un magnétomètre par rapport à la direction du champ magnétique terrestre, comprenant la préparation d'un magnétomètre muni d'un noyau magnétique (14) présentant un enroulement d'excitation en courant alternatif (11) et un enroulement de sortie enroulé autour, l'application d'un courant alternatif présentant une intensité suffisamment importante pour saturer ledit noyau magnétique (14), la formation dudit enroulement de sortie en deux bobines (12A, 12B) qui sont enroulées autour dudit noyau magnétique (14) au même nombre de fois et reliées en série, et l'obtention à partir dudit enroulement de sortie, en tant que variation en largeur d'impulsion, d'un signal de sortie correspondant à un angle $\alpha$ devant être formé entre une ligne reliant entre eux le point (M) de liaison desdites deux bobines (12A, 12B) et le point central (O) dudit noyau magnétique (14) et la direction du champ magnétique terrestre.

# FIG.1

| 1 | 2 | 3 | 5 | 6 BRIDGE CIRCUIT | 7 | 8 | 9 |

MAGNETIC COMPASS — MAGNETO-METER — MAGNETISM DETECTING CIRCUIT — AMPLIFIER — STEERING ENGINE

4 A.C. VOLTAGE SOURCE

10

# FIG.2

11

N·S 20

12

H

EP 0 100 625 B1

FIG.3 A

FIG.3 B

$V_1$
$V_2$

FIG.3 C

$V_1$
$V_2$

FIG.3 D

$V_1$
$V_2$

# FIG.4

2 3 5 BRIDGE CIRCUIT 6 7 8 9

MAGNETO-METER

4 A. C. VOLTAGE SOURCE

MAGNETISM DETECTING CIRCUIT

AMPLIFIER

STEERING ENGINE

10

# FIG.5

13

14 11

12-A 12-B

M O

H α

# FIG.8

12-A 14

13 M

11 12-B

EP 0 100 625 B1

# FIG.6

EP 0 100 625 B1

FIG.7 5-1

FIG.7 5-1a

FIG.7 5-1b

FIG.7 5-1c

FIG.7 5-3

EP 0 100 625 B1

FIG.7 5-2a

FIG.7 5-2b

FIG.7 5-2c

FIG.7 5-6

FIG.7 5-7

FIG.7 5-4